# EUROPEAN PATENT APPLICATION

(11) **EP 4 241 979 A1**
(43) Date of publication of application: **13.09.2023**
(21) Application number: 22161277.3
(22) Date of filing: 10.03.2022
(51) Int. Cl.: B32B 5/02, B32B 5/26, B62D 25/20, B62D 35/02, B62D 25/16, B32B 37/14

(54) **SUSTAINABLE NONWOVEN LAMINATE FOR STRUCTURAL PART APPLICATIONS**

(71) Applicant: Carl Freudenberg KG, 69469 Weinheim (DE)
(72) Inventor: Venugopal, Arun Prasad, 69469 Weinheim (DE); Weber, Marvin, 69469 Weinheim (DE); Weik, Angela, 68782 Brühl (DE)

(57) **Abstract**

Subject of the invention is a nonwoven laminate, comprising:
- a nonwoven layer (A) comprising multicomponent staple fibres,
- optionally, a nonwoven layer (B) comprising multicomponent staple fibers or monocomponent staple fibers,
- a needled nonwoven layer (C) comprising monocomponent staple fibres (c1) and multicomponent staple fibers (c2),
- an optional nonwoven layer (D) comprising multicomponent staple fibers or monocomponent staple fibres, and
- optionally, a nonwoven layer (E) comprising multicomponent staple fibres,
wherein the layers are arranged in the order from (A) to (E),
wherein the layers are bonded to each other by melt-bonding, and not by needling,
wherein the multicomponent fibers comprise a polyester component and a copolyester component,
wherein the monocomponent fibers in layer (C) are polyester fibers,
wherein the monocomponent fibers in layer (B) and (D) are copolyester fibers,
wherein the copolyester content in optional nonwoven layers (B) and (D) is higher than in nonwoven layers (A) and optional layer (E),
wherein layer (C) has a basis weight of 500 to 2000 g/m², determined according to DIN EN 29073-1:1992-08,
wherein the nonwoven laminate has a bending force of at least 6 N, determined according to ISO 178:2019 for 2 mm deflection.

The invention also relates to nonwoven laminates, shaped articles, uses thereof, products and processes for producing the same.

## Description

The invention relates to nonwoven laminates, shaped articles comprising such nonwoven laminates, uses thereof, products and processes for producing the same.

### State of the art

Nonwoven and nonwoven laminates are used in various technical applications, such as underbody shield materials for automotive applications. Such underbody shields can be produced by heating and shaping fibrous precursor materials. Underbody shields should meet stringent performance specifications, especially with regard to high mechanical stability, low water absorption and high acoustic absorption. In order to meet such specifications, different underbody shield materials have generally been suggested in the art.

WO 2016/183079 A1 discloses a composite article with a porous core layer, which contains a plurality of reinforcing fibres and a lofting agent. However, the reinforcing fibres may reduce the processability of the core layer. Additionally, the lofting agent may lead to dimensional instability when the article is heated and shaped. The reinforcing fibres and/or lofting agent may furthermore increase the costs of the composite article.

EP 3 489 008 A1 describes a base material nonwoven fabric having a two-layer structure of a long fibre nonwoven fabric layer and a short fibre nonwoven fabric layer. Both nonwoven fabric layers comprise polyester fibers. A polypropylene layer is located at the interface between the two nonwoven fabric layers. However, the use of polyolefins in such composite materials has various drawbacks. Generally, it is difficult to recycle products which comprise a combination of polyolefin and polyester. Further, polypropylene has a melting point of about 160°C, and thus heat resistance and non-flammability of the product are relatively low. Also, the product is not uniform, because polyester fibres and polypropylene have different properties in terms of e.g. elongation, tensile strength and the like. The simultaneous use of polyester and polypropylene can therefore potentially impede tailoring the characteristics of a final product.

Some nonwoven laminates in the art comprise combinations of specific staple fibre layers and spunbond layers. It is a general problem of such laminates, that staple fibre layers can shrink upon heating, whereas spunbond layers typically do not shrink. This can result in undesirable structural irregularities, which can impair stability and lead to poor aesthetics (the so-called elephant skin effect). It is a further problem that spunbond nonwovens are relatively costly.

US 2016/0288451 A1 describes a laminate with a needled staple fibre core layer, which is suited for vehicular underbody applications. At least one spunbond polyester layer is mechanically bonded to the core layer by needling. However, lamination by needling can affect the overall layer structure in a non-desirable manner. For example, needled stable fibres from the core layer can penetrate the outer spunbond polyester layers. Such structural irregularities can adversely affect stability and function.

EP 3 769 954 A1 discloses laminates comprising spunbond nonwoven layers and a central staple fiber nonwoven layer. The products are suitable as underbody shields and can have mechanical stability, low water absorption and good acoustic absorption. Since the laminates are not needled, the drawbacks of the needled structure can be avoided. However, spunbond nonwovens are very expensive. The combination of spunbond fiber layers with a needled heat set core layer of staple fibers can lead to non-uniform products, which can have different properties. Besides, the performance and mechanical properties could still be improved.

There is a general desire in the art for improved fibrous products, in particular for underbody shield applications, which overcome the above mentioned problems.

### Problem underlying the invention

The object of the present invention is to provide a fibrous product, uses, methods and products derived therefrom, which overcome the drawbacks encountered in the art. It is an object of the present invention to provide a fibrous product, which can be heated and shaped to a desired configuration, in particular which is dimensionally stable when heated and shaped.

Specifically, it is an object to provide a fibrous product having high mechanical stability, in particular with regard to tensile strength, bending strength and tear strength, and low heat-shrinking properties. The product should be available at relatively low costs, and in a relatively simple and convenient production process. It should be uniform, have good recyclability, high heat resistance and non-flammability, light weight and high acoustic absorption.

### Disclosure of the invention

Surprisingly, it was found that the problem underlying the invention is solved by nonwoven laminates, shaped articles, uses and methods according to the claims. Further embodiments of the invention are outlined throughout the description.

Subject of the invention is a nonwoven laminate, comprising:
- a nonwoven layer (A) comprising multicomponent staple fibres,
- optionally, a nonwoven layer (B) comprising multicomponent staple fibers or monocomponent staple fibers,
- a needled nonwoven layer (C) comprising monocomponent staple fibres (c1) and multicomponent staple fibers (c2),
- an optional nonwoven layer (D) comprising multicomponent staple fibers or monocomponent staple fibres, and
- optionally, a nonwoven layer (E) comprising multicomponent staple fibres,

wherein the layers are arranged in the order from (A) to (E),
wherein the layers are bonded to each other by melt-bonding, and not by needling,
wherein the multicomponent fibers comprise a polyester component and a copolyester component,
wherein the monocomponent fibers in layer (C) are polyester fibers,
wherein the monocomponent fibers in layer (B) and (D) are copolyester fibers,
wherein the copolyester content in optional nonwoven layers (B) and (D) is higher than in nonwoven layers (A) and optional layer (E),
wherein layer (C) has a basis weight of 500 to 2000 g/m², determined according to DIN EN 29073-1:1992-08,
wherein the nonwoven laminate has a bending force of at least 6 N, determined according to ISO 178:2019 for 2 mm deflection.

The nonwovens layers (A) to (E) are nonwoven fabrics. In the art, nonwovens are defined as fiber mats which have been consolidated either mechanically, thermally (by melting fiber polymer and adhesion of fibers to each other) or chemically (with an adhesive). In contrast, a mere fiber assembly or pile, which has not been consolidated, is not a nonwoven fabric. A nonwoven is not woven or knitted or a paper. In general, the nonwoven is a textile fabric as defined in DIN EN ISO 9092:2018. Typically, the nonwoven fibers are randomly laid and are not aligned.

The layers (A) to (E) are arranged in the order (A) to (E). If all layers are present, layers (B), (C) and (D) are embedded between layers (A) and (E). Preferably, layers (A) and (E) shield inner layer (C) from the environment. Preferably, optional layers (B) and (D) are adhesive layers, which enhance the bonding strength between layers (A) and (C), and (C) and (E). Preferably, the nonwoven composite does not comprise additional layers. Preferably, it consists of layers (A), (C) and (E), and optionally layer (B) and (D).

The nonwoven laminate is characterized by relatively high stiffness and mechanical stability. According to the invention, these properties can be adjusted by basis weight and thickness, especially for layer (C), which can be further adjusted by thermal bonding. Overall, the composite material is highly stable, but because of the fibrous nonwoven structure, has a significantly lower weight than comparable plastic materials. This is advantageous in many technical applications which require light weight and high stability materials, which can be transformed conveniently into shaped parts.

The nonwoven laminate has a bending force of at least 6 N, determined according to ISO 178:2019 for 2 mm deflection. Preferably, the bending force is at least 10 N or at least 15 N. Preferably, the bending force is between 6 N and 40 N, or between 10 N and 30 N. For example, the bending force can be adjusted by increasing the basis weight or thickness of layer C and/or consolidation. In this case, consolidation is preferably by calendaring the laminate, such that the outer layer or layers is/are bonded to layer (C). The high bending force indicates that the material is difficult to bend. It is board-like, has low flexibility and high stiffness, and resembles a rigid plastic material.

The needled staple fibre nonwoven layer (C) is characterized by a relatively high basis weight of 500 to 2000 g/m², determined according to DIN EN 29073-1:1992-08. More preferably, the basis weight is 800 to 1800 g/m², or especially 900 to 1600 g/m². For applications in standard passenger cars, a basis weight of 800 to 1500 g/m², more preferably of 1000 to 1400 g/m² and most preferably of about 1200 g/m² can be preferred. For applications in off-road vehicles, it is preferred that layer (C) has a basis weight of 1500 to 1700 g/m², more preferably of 1550 to 1650 g/m². The high basis weight is advantageous, because the nonwoven can have high mechanical stability and a good barrier function. Preferably, the bending force is between 10 N and 30 N at a basis weight of 1000 to 1700 g/m².

Preferably, nonwoven layers (A) and/or (E) have a basis weight of 20 to 200 g/m² according to DIN EN 29073-1:1992-08, respectively, more preferably between 25 to 150 g/m², or between 30 to 100 g/m².

Typically, the basis weight of layers (A) and/or (E) is significantly lower than of layer (C). Preferably, the basis weight of layer (C) is at least 3 times higher, or 5 times higher, than of layer (A) and/or (E), respectively. This is advantageous, because outer layers (A) and (E) can shield layer (C). For example, the outer layers can be relatively compact and mechanically stable, whereas layer (C) can have a lower density. Thereby, a relatively light nonwoven laminate can be obtained, which is effectively shielded and stabilized by the outer layers.

Preferably, optional layer (B) and/or layer (D) have a basis weight according to DIN EN 29073-1:1992-08 of 5 to 100 g/m², preferably of 5 to 50 g/m², more preferably of 10 to 20 g/m². These layers can function as adhesive layers and can confer high stability and peel strength to the laminate, if they have a relatively low basis weight. Preferably, the basis weight of layer (A) and/or (E), respectively, is at least two times, preferably at least 3 times higher than of layer (A) and/or (E), respectively.

It is preferred that the nonwoven laminate has at least one of the following characteristics:
- a tensile strength of ≥ 800 N according to ASTM 5034:2009; and/or
- a tear strength of ≥ 100 N according to DIN EN 29073-3:1992-08.

These properties can confer high wear resistance and acoustic absorption to the nonwoven laminate.

It is more preferred that the nonwoven laminate has a tensile strength of ≥ 800 N, preferred of ≥ 1000 N and more preferred of ≥ 1050 N. With the respectively increasing tensile strength, the mechanical properties, such as stiffness, wear resistance and acoustic absorption of the nonwoven laminate can be further increased.

It is more preferred that the nonwoven laminate has a tear strength of ≥ 100 N, preferred of ≥ 120 N and more preferred of ≥ 140 N. With the respectively increasing tear strength, the mechanical properties, such as stiffness, wear resistance and acoustic absorption of the nonwoven laminate can be further increased.

Preferably, the nonwoven laminate has a thickness of 1 mm to 10 mm, preferably 1.5 to 8 mm, especially preferred 2 to 6 mm, determined preferably according to DIN EN ISO 9073-2 (method A). It is especially preferred that the thickness of the nonwoven laminate is at least 1.5 mm or at least 2 mm. Preferably, the thickness of outer layer (A) and/or (E) in the nonwoven laminate is 0.2 to 1 mm, preferably 0.3 to 0.8 mm.

The nonwoven laminate is characterized in that all fibers in layers (A) to (E) are staple fibers. A staple fibre is a fibre of discrete length. A plurality of staple fibres has an average fiber length, referred to as staple length. Preferably, the nonwoven does not comprise fibers other than staple fibers.

In contrast, a spunbond nonwoven is formed from "endless" fibres, which are drawn from molten fibre raw material and continuously laid into a fiber felt. Spundbond fibers are not cut to a defined length. Layers (A) to (E) are not spundbond nonwovens and do not comprise spunbond fibers. Preferably, the nonwoven laminate does not comprise spunbond fibers and/or a spunbond nonwoven.

The nonwoven laminate is not produced by needling the layers together. However, layer (C) has been mechanically needled. A needled nonwoven layer comprises a plurality of fibres, which have been intermingled and consolidated with mechanical needles. Needled nonwovens are characterized by local regions, in which the needles have passed the nonwoven in vertical directions, thereby drawing fibers and fiber bundles with them in vertical direction. They comprise local regions or even voids, in which the fiber density is low, surrounded by regions in which the fibers are densified.

Nonwoven layer (C) was needled before assembly of the nonwoven laminate. In a preferred embodiment, layers (A) and (B) were also mechanically needled, before assembly of the nonwoven laminate. It was found that a needled structure of the layer can confer advantageous mechanical properties to the nonwoven laminated.

Overall, the nonwoven laminate comprises, and preferably consist of, multicomponent and monocomponent staple fibers. The multicomponent fibers comprise a polyester component and a copolyester component. The monocomponent fibers in layer (C) are polyester fibers. The monocomponent fibers in optional layers (B) and (D) are copolyester fibers. Typically, the copolyester and polyester are thermoplastic polymers.

Polyesters are polymers which comprise an ester functional group in every repeating unit of the polymer backbone. Copolyesters are polymers of a first diacid monomer and a first diol monomer, which also comprise at least one second different diacid monomer and/or at least one second different diol monomer. Thus, a copolyester is a specific type of polyester. The term polyester includes polymers from at least two different monomers, whereas copolyesters are formed from three or more different monomers. Preferably, the polyester in the fibers is formed from two monomers. Typically, the diacid monomer is a dicarboxylic acid monomer.

The nonwoven layers are bonded to each other by melt-bonding (thermal bonding). Melt-bonding is a technique of joining thermoplastic fibers by applying energy to at least one of the materials, thereby softening or melting the fibers, and bringing them into intimate contact, followed by cooling. Typically, pressure is applied, such that the fibers and/or layers are brought into intimate contact and bonded. The nonwoven laminate is obtained by stacking layers in the order (A) to (E), followed by melt-bonding the stack. Each layer comprises at least one component, which contributes to melt bonding. Preferably, the bonding component in all layers is the copolyester, which is preferably the same copolyester in all layers. Typically, all copolyesters in the nonwoven fabric are thermoplastic polymers. Melt-bonding the layers to each other is advantageous, because it can lead to high homogeneity of the heat-shrinking properties of the nonwoven laminate. This high homogeneity can reduce the formation of elephant skin during moulding, such that the nonwoven laminate can have appealing aesthetics and high bending strength after moulding. The melt-bonding of the layers to each other can also confer high dimensional stability to the nonwoven laminate when heated and shaped.

It was found that the nonwoven laminated can be highly stable when it is only consolidated by melt-bonding. The nonwoven laminate is preferably not chemically bonded. This means that no additional binder, for example in particle or liquid form, is used for bonding. Using solely melt-bonding has the advantage that the production process can be kept relatively simple, and that the number of components can be kept low. In contrast, adhesive binders for chemical bonding can cause various problems, such as recycling problems, or undesirable aging, abrasion and release of micro- or nanoparticles.

Preferably, the multicomponent fibers are bicomponent fibers. Thus, they consist of the polyester component and the copolyester component. The multicomponent fibers function as binder fibers in the nonwoven laminate. Since the copolyester is the binder component, it is present at least on the surface of the binder fibers. The melting point and/or softening point of the copolyester is lower than of the polyester. Preferably, the difference is at least 10°C or at least 20°C. Upon melt-bonding, the nonwoven is heated to a temperature, in which only the copolymer is molten or softened, whereas the polyester component is not. Thus, the polyester fibers or components maintain their structure and shape in the melt bonding process.

The polyester component of the multicomponent fibers, and of the monocomponent fibers in layer (C), can be any known polyester. It is highly preferred that the polyester is polyethylenterephthalate (PET). PET is a copolymer of terephthalic acid and ethane-1,2-diol (also referred to as ethylene glycol). It is mechanically stable, has a relatively high melting temperature, can be spun into fibers conveniently and is available at low costs. In another embodiment, another polyester is used, such as polycarbonate, polylactide (PLA), polyethylennaphthalate (PEN), polybutylene terephthalate (PBT), or polytrimethylenterephthalate (PTT), or a copolymer or mixture thereof.

Preferably, the polyester in all layers is PET. The PET can be virgin PET (not recycled), recycled PET (r-PET) or a mixture thereof. Virgin PET can allow for a more precise setting of mechanical properties of the nonwoven laminate. Recycled PET can allow for reduced costs of the nonwoven laminate. The recycled PET may comprise a small amount of other polymers, such as polyolefin.

Using PET in all nonwoven layers has various advantages. PET can confer high homogeneity of mechanical properties of the nonwoven laminate. In particular, the homogeneity of elongation and tensile strength of the nonwoven laminate can thereby be enhanced. The nonwoven laminate can thereby be easily heated and shaped to provide a desired configuration. The nonwoven laminate can thereby be dimensionally stable when heated and shaped. Further, PET can provide a relatively low basis weight to the layers and the overall laminate, respectively. This is advantageous, because a low weight is generally desirable in automotive or other applications for decrease the energy costs. Further, PET has a comparably high melting point of about 260°C. The nonwoven laminate can thereby have high heat resistance and non-flammability characteristics. Melting points are herein preferably determined according to DIN ISO 11357-3:2013. The PET is also comparably inexpensive. The nonwoven laminate can thereby contribute to a reduction of costs of articles which comprise the nonwoven laminate.

All layers of the nonwoven laminate comprise a copolyester. The copolyester can be amorphous copolyester, crystalline copolyester or a mixture of amorphous copolyester and crystalline copolyester. It is preferred that the copolyester is a copolymer of polyethylene terephthalate. A copolymer of polyethylene terephthalate comprises the monomers terephthalic acid, ethane-1,2-diol, and at least one further different dicarboxylic acid monomer and/or at least one further different diol monomer. A preferred further dicarboxylic acid monomer is adipic acid. Another preferred further dicarboxylic acid monomer is isophthalic acid. A preferred further diol monomer is cyclohexane dimethanol. A copolymer of polyethylene terephthalate can ease the recyclability of the nonwoven laminate. A copolymer of polyethylene terephthalate can increase the peel strength within the nonwoven laminate. A copolymer of polyethylene terephthalate can reduce the costs of the raw materials for the nonwoven laminate.

It is preferred that the copolyester has a melting point of ≤ 240°C. It is more preferred that the copolyester, in particular the copolyester in layers (B), (C) and (D), has a melting point of ≤ 220°C, further preferred of ≤ 210°C, even more preferred of ≤ 200°C and still more preferred of ≤ 190°C, in particular of = 180°C. Thereby, the copolyester can reduce the energy required for melt-bonding the fiber layers to each other, and further reduce the energy required for producing the fiber layers. The energy reductions can increase continuously for lower melting points. Copolymers having such melting points are especially suitable binder components, when the polymer is PET.

It is preferred that the copolyester in all layers has a melting point in the range of 100 to 240°C, more preferred in the range of 110 to 230°C, even more preferred in the range of 140 to 225°C and still more preferred in the range of 160 to 220°C. A copolyester having a melting point within these ranges can reduce the energy required for melt-bonding the layers to each other, and can increase the bonding strength between layers after melt-bonding, especially when the polymer is PET.

In a preferred embodiment, the copolyester in layers (A) and/or (E) has a higher melting point than the copolyester in layer (C), preferably by ≥ 20°C, more preferably higher by ≥ 30°C, and further preferably higher by ≥ 35°C. In this way, a stronger bond between the layers after melt-bonding can be achieved.

It is preferred that the copolyester in all layers has a melting point ≥ 120°C, more preferred ≥ 140°C °C and still more preferred ≥ 160°C. This can increase the bonding strength between the layers upon melt-bonding and confer thermal stability to the nonwoven.

The nonwoven laminate may comprise one or both of layers (B) and (D). The copolyester content in nonwoven layers (B) and (D) is higher than in nonwoven layers (A) and (E). Therefore, layers (B) and (D) can function as binder (adhesive) layers, which increase the binding strength (peel strength) between layers (A) and (C) and/or layers (C) and (E).

The nonwoven laminate may comprise or consist of
- layers (A), (B), (C), (D) and (E),
- layers (A), (B), (C), and (E),
- layers (A), (C) and (E),
- layers (A), (B) and (C) or
- layers (A) and (C).

Layers (A) and (C) are always comprised. However, it is highly preferred that at least layers (A), (C) and (E) are comprised. In this embodiment, central layer (C) is embedded between two outer layers, which can provide protection and shielding. A nonwoven laminate comprising all layers (A), (B), (C), (D) and (E) can be preferred for increased peel strength. A nonwoven laminate consisting of layers (A), (C) and (E) can be preferred for simplified producibility and cost efficiency. A laminate consisting of layers (A) and (C) can be preferred from a cost/benefit consideration, if shielding from one side, or properties such as water absorption or acoustics, are less important. In the laminate, an assembly of layers (A) and (C) only is equivalent to an assembly of layers (C) and (E) only.

In another embodiment, the nonwoven composite may comprise one or more additional layers which are different from layers (A) to (E). For example, it would be possible to include at least one further intermediate layer and/or outer protection layer. The intermediate layer could be composed as layer (C), but with variation of fiber ratio, composition, type or the like. For example, a gradient of structure and properties could be provided. However, this is less preferred, because it renders the laminate more complicated and costlier.

The nonwoven laminate layers are not bonded to each other by needling, such that none of the layers is needled to another layer. Typically, they are not mechanically bonded to each other, such that there is no mechanical bonding between adjacent layers. In general, nonwovens can be bonded mechanically by needling or hydroentanglement (fluid jet treatment). These method lead to penetration of fibers or fiber bundles from one layer into another layer. Typically, the fibers of the inventive nonwoven laminate, do not penetrate an adjacent layer and/or there is no fiber entanglement between layers. This has the advantage that a shaped article can be produced from the nonwoven laminate which is flat, in particular without wrinkles or a wavy structure, and has a high bending strength.

In a preferred embodiment, at least one nonwoven layer is thermally bonded (melt-bonded) before combining the laminate layers (i.e. discretely). Preferably, the layer is thermally bonded by calendaring. In this embodiment, the layer is squeezed between calendar rolls which are heated to a temperature above the softening point of a fiber material. Preferably, layers (A), (C) and (E), or even all layers were thermally bonded discretely. This has the advantage that each layer can be provided in stable form, before the laminate is formed. The layers can be combined subsequently and melt-bonded together. Typically, thermal bonding of discrete layers and subsequent thermal bonding of the laminate are realized by the same means, i.e. melting and bonding the copolyester.

Preferably, nonwoven layer (C) is thermally bonded discretely by heat-setting and/or heat-shrinking. In heat-setting process, the discrete layer is subjected to heat, without applying significant pressure, for example by calendar rolls. Typically, the nonwoven is heat-set in an oven. This can be advantageous, because if layer (C) can be relatively thick, thermal bonding by calendaring could be inefficient. Further, heat-setting can have the advantage that layer (C) is heat-shrunk. Preferably, the needled fibres are heat shrunk in both machine and cross direction. A heat-shrunk needled staple fibre becomes dimensionally stable, which is advantageous for subsequent lamination and shaping. Typically, the base weight is increased during heat shrinking. This can avoid undesired formation of elephant skin during a subsequent moulding process. Heat-setting is also advantageous, because the material is not compressed and can have relatively light weight.

In a preferred embodiment, nonwoven layers (A) and/or (E) were thermally bonded by calendaring before assembly of the laminate. In such a process, the substrate is compressed under heat, which leads to intimate binding. This is advantageous, because outer layers (A) and/or (E) of the nonwoven can be provided in relatively compact and stable form, and can thus effectively shield layer (C) from the environment in the nonwoven laminate.

Preferably, nonwoven layers (A) and/or (E) were needled before assembly of the laminate. This is advantageous, because the needled outer layers can have high mechanical stability, and can thus protect the layer (C) from the environment.

It is highly preferred that all fibres are polyester, especially PET, and copolyester fibers, because the nonwoven laminate can then have relatively low costs, relatively low weight and relatively high peel strength. The nonwoven laminate can thereby be recycled more easily. The heat resistance characteristics and non-flammability characteristics can thereby be increased. The homogeneity of mechanical characteristics of the nonwoven laminate, especially its elongation and tensile strength, can thereby also be increased. This can allow an easier tailoring of the characteristics of a product comprising the nonwoven laminate.

In a less preferred embodiment, a certain amount of all fibres in the nonwoven laminate are not polyester or copolyester fibers, for example less than 20% or less than 10%. It is preferred that the nonwoven laminate does not contain polyolefins, in particular not polypropylene and/or polyethylene.

It is preferred that the nonwoven laminate does not contain inorganic reinforcements, in particular not glass fibres. The absence of inorganic reinforcements, in particular the absence of glass fibres, can ease the processability of the nonwoven laminate and lower the costs. It is preferred that the nonwoven laminate does not contain any lofting agent. The absence of any lofting agent can increase the dimensional instability of the nonwoven laminate when the nonwoven laminate is heated and shaped, and can lower the costs.

For conferring even higher wear resistance and increased acoustic absorption of the nonwoven laminate, it is particularly preferred that the nonwoven laminate has a bending strength of ≥ 150 MPa and/or a tensile strength of ≥ 800 N. It is most preferred that the nonwoven laminate has a tear strength of ≥ 100 N. The high bending strength and tensile strength indicate that the product is rigid, which is relevant for structural parts such as an underbody shield. The high tear strength and tensile strength also indicate that the product has high stability against mechanical stress or strain, which is also relevant for use in structural parts, such as underbody shields. These properties indicate that the nonwoven laminate can replace conventional moulded thermoplastic parts, which are used in the art for such applications. Moreover, the nonwoven laminates and products derived therefrom are advantageous, because the fibrous structure can have light weight, high acoustic absorbance and is surprisingly stable.

It is preferred that the nonwoven laminate has a bending strength of ≥ 150 MPa, preferably of ≥ 300 MPa, more preferred of ≥ 350 MPa. If the thickness is relatively high, such as more than 3 mm, the bending strength is preferably ≥ 350 MPa, more preferably ≥ 500 MPa. With the respectively increasing binding strength, wear resistance and acoustic absorption of the nonwoven laminate can be further increased.

It is preferred that the copolyester in all layers, in particular in layers (A) and (E), has a density of 1.1 to 1.6 g/cm³, more preferably of 1.2 to 1.5 g/cm³, and still more preferably of 1.3 to 1.4 g/cm³. The density is determined according to DIN EN ISO 1183-1:2019-09. Such a density can lead to a laminate of appropriate strength, while avoiding excessive costs.

Preferably, the bicomponent fibers in layers (A), (C) and/or (E) comprise at least 20% copolyester, preferably 5% to 70% copolyester and 30% to 95% polyester. Preferably, layers (A), (C) and (E) comprise 20% to 80%, preferably 30 to 70% copolyester, in particular preferred at least 40% copolyester, at least 50% copolyester, at least 60% copolyester, or at least 70% copolyester, especially when layers (B) and (D) are not present. Such a copolyester content can provide efficient bonding, thereby avoiding a wavy structure of the laminate. Such a copolyester content can further achieve an increased bending strength of the laminate. Herein, "%"refers to % by weight, unless defined otherwise. Herein, the residue is the polyester component.

When layers (B) and (D) are present, it can be preferred that layers (A) and/or (E) comprise 2% to 30% copolyester, more preferred 5 to 25% copolyester. Bonding will then be supported by the adhesive layers (B) and (D). When layers (A) and/or (E) comprise at least 30%, more preferably at least 40%, at least 50%, at least 60% or at least 70% copolyester, a laminate without layers (B) and (D) can have high peel strength. That is, neither layer (B) nor layer (D) may then be needed for an increased peel strength. The production of the laminate can thereby be simplified.

It is preferred that layer (C) consists of 10 to 90% monocomponent fibres (c1) and 10 to 90% multicomponent fibres (c2); more preferably of 20 to 80% monocomponent fibres (c1) and 20 to 80% multicomponent fibres (c2), even more preferred 30 to 70% of monocomponent fibres (c1) and 30 to 70% multicomponent fibres (c2), still more preferred 40 to 60% of monocomponent fibres (c1) and 40 to 60% multicomponent fibres (c2). The monocomponent fibers do not melt during thermal bonding. Thus, the basic structure of the layer can be maintained upon thermal bonding. Thus, the layer and the overall laminate can remain mechanically stable, but on the other hand can be relatively light.

Specifically, when layer (C) consists of 10 to 90% of monocomponent staple fibres (c1) and 10 to 90% of multicomponent staple fibres (c2), it can be needled more conveniently. Further, the use of PET as the polyester in layer (C) can reduce the overall weight of the nonwoven laminate, can lead to high heat resistance and nonflammability characteristics of the nonwoven laminate and can reduce the costs of the nonwoven laminate.

Preferably, in layer (C) the monocomponent fibres are PET fibers, and the multicomponent fibers are bicomponent fibres comprising comprise PET as the first component and CoPET as the second component.

Preferably, the multicomponent fibers in the nonwoven laminate are bicomponent fibres, which have a sheath-core, an island-in-the-sea, a pie-segment or side-by-side structure, preferably a sheath-core structure. The copolyester binder component is present at least a surface of the bicomponent fibres. It is preferred that the staple fibres (c2) have at least one, more preferably two or more and most preferably all of the following characteristics:
- a fineness of 2 to 9 dtex, more preferably 3 to 7 dtex, still more preferably 4 to 6 dtex, determined according to DIN EN ISO 1973:2020-05;
- a fibre length of 30 to 100 mm, more preferably 40 to 70 mm, still more preferably 45 to 55 mm;
- a strength of 1 to 6 g/de, more preferably 2 to 5 g/de, still more preferably 3 to 4 g/de, determined according to DIN EN 13844:2003-04;
- an elongation of 20 to 60%, more preferably 30 to 50%, still more preferably 35 to 55%, determined according to DIN EN ISO 5079:2020-01;
- a crimp of 4 to 10 EA/inch, more preferably 5 to 9 EA/inch, still more preferably 6 to 8 EA/inch, determined according to JIS L-1074;
- a heat shrinkage of 3 to 7%, more preferably 4 to 6%, still more preferably 3.5 to 4.5%, at 75°C x 15 min, determined according to DIN EN 13844:2003-04.

When the staple fibres (c2) have at least one, more preferably two or more and most preferably all of the above characteristics, the needled staple fibre nonwoven layer (C) can simultaneously impart strength and stiffness to the nonwoven laminate.

It is preferred for the nonwoven laminate that
- the copolyester in all layers is a copolymer of polyethylene terephthalate (CoPET), which has a melting point of 160 to 240°C;
- it comprises layer (B) and layer (D), both consisting of copolyester and having a basis weight according to DIN EN 29073-1:1992-08 of 5 to 30 g/m²; and
- layer (C) consists of 30 to 70% of monocomponent staple fibres (c1) and 30 to 70% of multicomponent staple fibres (c2).

Such a preferred nonwoven laminate can be easily heated and shaped to provide a desired configuration and can be dimensionally stable when it is heated and shaped. In particular, it can be suited as an underbody shield material. Due to the presence of layers (B) and (D), the peel strength and heat resistance can be high.

In another embodiment, it is preferred for the nonwoven laminate
- it comprises neither layer (B) nor layer (D);
- the copolyester in layers (A), (C) and (E) is a copolymer of polyethylene terephthalate, said copolymer having a melting point of 160 to 240°C; and
- layer (C) consists of 30 to 70% of monocomponent staple fibres (c1) and 30 to 70% of multicomponent staple fibres (c2).

Such a nonwoven laminate can be easily heated and shaped to provide a desired configuration and can be dimensionally stable when heated and shaped. Such a preferred nonwoven laminate can in particular be suited for application as an underbody shield material. Due to the absence of layers (B) and (D), the costs for the nonwoven laminate can be reduced and the production can be simplified.

Subject of the invention is also a shaped article (shaped body, shaped part) comprising an inventive nonwoven laminate. The article can be obtained by moulding the nonwoven laminate into a desired shape. It may be a flat sheet or have defined dimensions, which may comprise edges or bent regions. It is advantageous that such a shaped article can be light weight and homogeneous. It is easy to manufacture and not costly, because it comprises only staple fibers, can be based fully on polyesters and copolyesters, and does not require spunbond materials.

Subject of the invention is also a method for producing the shaped article, comprising
- providing an inventive nonwoven laminate,
- heating the nonwoven laminated to a temperature, at which the copolyester is soften or molten, and
- moulding the nonwoven laminate into the shaped part.

Preferably, the shaped article is cold moulded. In a cold moulding process, the nonwoven laminate is preheated in an oven, for example at a temperature range between 180°C and 220°C for 1 to 5 min, depending on the basis weight, to activate the low melting copolyester which acts as a binder. The binder is softened or melts and can adhere the PET fibres to each other. After heat activating, the nonwoven laminate is placed in a compression mould. The compression mould may compress all or a portion of the nonwoven laminate at a tonnage of 50 tons to 200 tons. Typically, the nonwoven laminate is allowed to remain in the mould for up to 60 seconds. The compressed nonwoven laminate is allowed to cool inside or outside the mould to allow the copolyester to cool below the melting point. Thereafter, the nonwoven laminate can be converted to its final shape. The final thickness of the material can be between 2 mm and 6 mm, depending on the requirements of the intended application. The nonwoven laminate can then then trimmed as required, which may be achieved by mechanical, thermal or waterjet cutting.

In another embodiment, the shaped article is hot moulded. In this process, the nonwoven laminate is placed between a pair of hot compression mould plates. The plates are then allowed to close to a desired thickness which is less than the thickness of the material. For example, if the nonwoven laminate thickness is 6 mm, the thickness between the plates is between 2 mm and 5 mm. The moulding plates are heated to a temperature in the range of 180 °C to 220°C. The nonwoven laminate then is compressed for 1 to 3 min depending on the basis weight, which is to activate the low melting copolyester (or binder). Thereafter, the nonwoven laminate can be converted to its final shape. Typically, the final thickness of the material is between 2 mm and 6 mm, depending on the requirement of the intended application.

The nonwoven laminate and/or shaped article can be used for various technical applications, in which high stability, light weight, acoustic absorption and/or low costs are required. Subject of the invention is an as an underbody shield, wheel arch liner, roof pillar, structural part for luggage or luggage compartments, cover or panel materials, or other structural part, especially for automotive application.

Subject of the invention is also a use of an inventive nonwoven laminate or an inventive shaped article for an as an underbody shield, wheel arch liner, roof pillar, structural part for luggage or luggage compartments, cover or panel materials, or other structural part, especially for automotive application. Particularly pronounced in such uses are the advantages of enhanced wear resistance and high heat resistance and nonflammability characteristics and the advantages associated therewith.

Subject of the invention is also a process for producing the inventive nonwoven laminate, comprising:
- preparing a needled stable nonwoven layer (C) by needling;
- providing layer (A), and optionally layers (B), (D) and (E), and
- melt-bonding the layers to each other.

The process is advantageous due to the effect of an easy joining of the layers by melt-bonding, which can result in high peel strength, and the stability in technical applications associated therewith.

Exemplified embodiments of the invention and aspects of the invention are shown in the figures.
Fig. 1 shows schematically and in exemplified form individual layers of a preferred five-layer nonwoven laminate in accordance with the present invention.
Fig. 2 shows schematically and in exemplified form individual layers of a preferred three-layer nonwoven laminate in accordance with the present invention.
Fig. 3 shows the results of acoustic measurements according to the working examples.

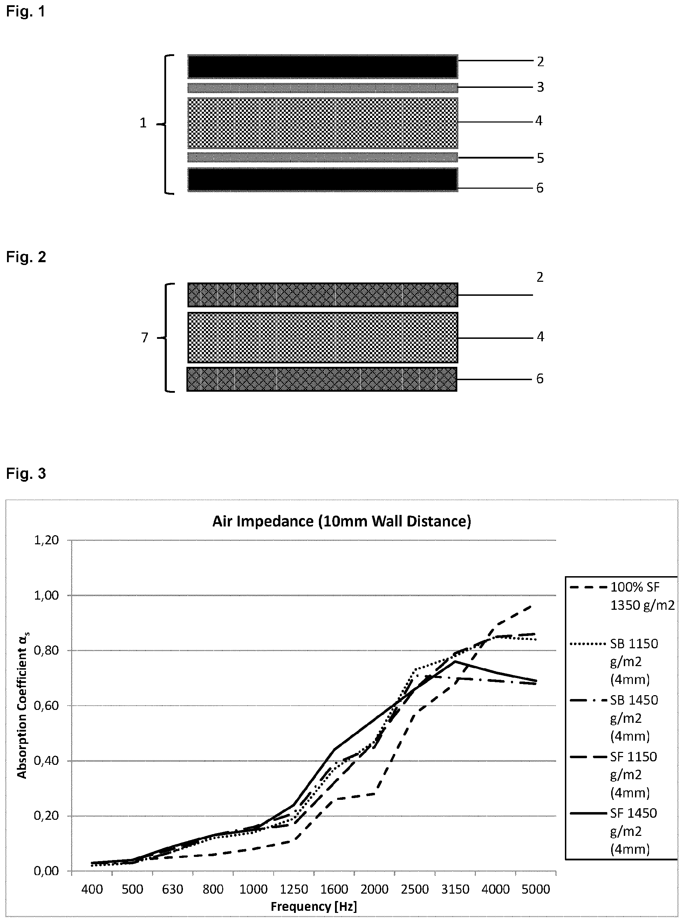

In Fig. 1, a preferred five-layer nonwoven laminate 1 in accordance with the present invention is shown. The five-layer nonwoven laminate 1 comprises a first outer layer 2 corresponding to layer (A), a first adhesive layer 3 corresponding to layer (B), a core layer 4 corresponding to layer (C), a second adhesive layer 5 corresponding to layer (D), and a second outer layer 6 corresponding to layer (E). The layers of this laminate are not mechanically bonded to each other, but exclusively melt-bonded to each other.

In one embodiment, an advantageous fibre preparation is carried out before needling the stable fibres (c1) and (c2) into core layer (C). More specifically, before the needling process, fibres (c1) and (c2) are opened from bales, mixed and carded. Thereafter, fibres (c1) and (c2) are cross-lapped and passed onto a needling machine. Alternatively, fibres are prepared by air-laying or air-laid process, in which the opened fibres are collected on a suction band and needled. The core 4 is pre-shrunk by application of heat to avoid shrinkage during a subsequent moulding process. Staple fibres (c1) and/or (c2) preferably have a length in the range of 10 mm to 150 mm, more preferably of 30 mm to 100 mm.

In one embodiment, core layer (C) contains a mixture of 10 to 70% virgin or recycled PET staple fibres (c1) in combination with 30 to 90 % bicomponent fibres (c2). The bicomponent fibres have a sheath-core construction in which the sheath has a melting point that is lower than the melting point of the core. The bicomponent fibres can have a variety of geometric configurations, such as side-by-side, sheath-core, segmented pie or island-in-the-sea structures.

In one embodiment, the binder polymer of bicomponent fibre (c2) is selected based on its melting point. In a preferred sheath-core configuration, the core preferably consists of PET and the sheath preferably consists of a copolyester having a melting point of < 200°C. One particularly preferred binder fibre has a sheath-core filament configuration. The core can consists of PET having a melting point of > 250°C, i.e. of about 260°C, and the sheath can consist of copolyester having a lower melting point in the range between 110°C and 200°C.

In Fig. 2, a preferred melt-bonded three-layer nonwoven laminate 7 in accordance with the present invention is shown, with layers 2, 4 and 6 as outlined above for Fig. 1, but without adhesive layers 3 and 5 corresponding to layers (B) and (D).

The inventive nonwoven laminate, uses, methods and products solve the problem underlying the invention. The nonwoven laminate which can be heated and shaped conveniently to a desired form. It is dimensionally stable, in particular regarding tensile strength, bending strength, tear strength and/or heat-shrinking. The nonwoven laminate is available at low costs, and in a simple and convenient production process. It is not required to make use of spunbond fibers or spunbond layers. The nonwoven laminate is highly uniform, as it can be obtained only from staple fibers, and only from polyester and copolyester. Thus, it can have good recyclability, high heat resistance and non-flammability, light weight and provide high acoustic absorption.

### Examples

### Example 1 - Production of nonwoven laminate

A nonwoven laminate of the invention was produced from nonwoven layers (A), (C) and (E).
Outer layers (A) and (E):
100% bicomponent staple fibers
Material: core 50% PET, sheath 50% copolyester of PET (CoPET, T_{M} = 180°C)
length 51 mm, fineness 2.1 den
Basis weight: 50 g/m²

### Central layer (C):

50% monocomponent staple fibres (c1) / Material: r-PET / Staple fiber length: 67 mm / fineness: 6.7 den
50% bicomponent staple fibers
Material: core 50% PET, sheath 50% copolyester of PET (CoPET, T_{M} = 180°C)
length 51 mm, fineness 4.4 den

For layer (C), the staple fibres were mixed at a ratio of 50%:50%, carded, cross-lapped and needled. The needles used were Groz-Beckert 36gg fine needles with a total needling intensity of 350 needles/cm². The needling depth was set at 10 mm on both sides. The needled fabric then thermally bonded in a through air oven which was heated to 200°C, such that bicomponent fibres were activated (softened) and bonded. After cooling, stiff nonwoven fabrics were obtained which had a basis weight of about 1050 and about 1350 g/m².

A nonwoven fabric for use as layers (A) and (E) was produced from bicomponent staple fibers. The fibers were carded, cross-lapped and needled as described above for layer (C), except that the needling was carried out at 150 needles/cm². Subsequently, the needled nonwoven fabric was thermally bonded by calendaring at a temperature of 200°C at 20 m/min. A nonwoven fabric was obtained which had a basis weight of about 50 g/m².

The nonwoven fabric for layer (C) was passed through a set of calendar rollers, where outer layers (A) and (E) were introduced on both sides. The calendar pressure was 25 bars on both sides at a temperature of 200°C, such that the layers were melt-bonded to each other. Nonwoven laminates were obtained which had a basis weight of about 1150 g/m² (sample D) and about 1450 g/m² (sample E), and a thickness of 4 mm or 2 mm. All layers are melt-bonded (thermally bonded) to each other, whereas no layer is mechanically bonded to another layer. The nonwoven laminate was sheet-cut.

A comparative nonwoven fabric (sample A) was prepared, which consists of a single layer of the bicomponent melt-bonded staple fibers, having a basis weight of about 1350 g/m². Further comparative nonwoven fabrics were prepared, which consist of an inner needled staple fiber layer, and two outer spunbond layers which were discretely thermally bonded and not needled, wherein all three layers were combined by melt-bonding, at a basis weight of about 1150 g/m² (sample B) and 1450 g/m² (sample C).

### Example 2: Production of shaped articles:

Shaped articles were prepared from nonwoven laminates of example 1 by cold-moulding. The sheet-cut nonwoven laminate was introduced into an oven heated up to 210°C for 3 min (in case of an through air oven) or 1 min (in case of an infra-red oven), such that the CoPET component became softened. The fabric was immediately transferred to a cold press, where the material was moulded at high pressure (50 tons or more), bent and formed. The shaped articles are stiff and mechanically stable. They are suitable for various technical applications, such as underbody shields. The results demonstrate that the nonwoven laminates of the invention can be conveniently used for forming stable molded articles of desired shape.

### Example 3: Acoustic absorption

The acoustics properties of nonwoven laminates of example 1 were tested in an alpha-cabin. Samples were laid either near the wall or the ground with an air gap of 2 mm. The absorption coefficient is measured by a series of sensors in the cabin. The results are summarized in Table 1. Fig. 3 show the results graphically by sound frequency (abscissa) vs. absorption coefficient αₛ (ordinate). The higher the sound absorption coefficient αₛ, the better is the acoustic performance of the tested sample. The results demonstrate that the acoustic absorption of the inventive nonwoven laminates is much better than of comparative sample A, which consists of staple fiber but does not comprise defined layers. Further, the performance is comparable to comparative laminates with outer spunbond layers. Inventive sample E has the overall best performance. Notably, performance is especially good in the range of 400 to 800 Hz, which is of special relevance in automotive underbody applications.

**Table 1: Results acoustic absorption of samples (4 mm)**

| **Sample** | | **A** | **B** | **C** | **D** | **E** |
|---|---|---|---|---|---|---|
| | | comp | comp | comp | | |
| fabric type | | SF (single layer) | SB | SB | SF | SF |
| basis weight [g/m²] | | 1350 | 1150 | 1450 | 1150 | 1450 |
| Frequency [HZ] | d=λ/4 [mm] | Results: absorption coefficient as | | | | |
| 400 | 214 | 0,03 | 0,02 | 0,03 | 0,03 | 0,03 |
| 500 | 172 | 0,04 | 0,03 | 0,03 | 0,04 | 0,04 |
| 630 | 136 | 0,05 | 0,07 | 0,07 | 0,08 | 0,09 |
| 800 | 107 | 0,06 | 0,12 | 0,13 | 0,13 | 0,13 |
| 1000 | 86 | 0,08 | 0,14 | 0,16 | 0,15 | 0,15 |
| 1250 | 69 | 0,11 | 0,19 | 0,21 | 0,17 | 0,24 |
| 1600 | 54 | 0,26 | 0,37 | 0,39 | 0,32 | 0,44 |
| 2000 | 43 | 0,28 | 0,47 | 0,45 | 0,47 | 0,55 |
| 2500 | 34 | 0,57 | 0,73 | 0,71 | 0,66 | 0,66 |
| 3150 | 27 | 0,68 | 0,78 | 0,70 | 0,79 | 0,76 |
| 4000 | 21 | 0,89 | 0,85 | 0,69 | 0,85 | 0,72 |
| 5000 | 17 | 0,97 | 0,84 | 0,68 | 0,86 | 0,69 |
| 6300 | 14 | 0,98 | 0,83 | 0,71 | 0,87 | 0,68 |

| | | | | | | |
|---|---|---|---|---|---|---|
| Abbreviations: comp = comparative, SF = staple fiber, SB = spunbond (outer layers). | | | | | | |

### Example 4: Mechanical properties

The mechanical properties of nonwoven laminates from example 1 were examined. The results are summarized in table 2 for nonwoven laminates having a thickness of 4 mm, and in table 3 for corresponding nonwoven laminates having a thickness of 2 mm. Bending strength was determined according to ISO 178:2019-04, tensile strength according to ASTM 5034:2009; and tear strength according to DIN EN 29073-3:1992-08.

The bending force is determined according to ISO 178:2019 for a bending deflection of 2 mm. The following conditions were adjusted: three-point bending test, sample width 30 mm, pre-force 0.5 N, test speed 10 mm/min, radius bending stamp 5 mm, distance (span) between probe holders 64 mm, distance between support rolls 5 mm, radius support rollers 5 mm.

The results demonstrate that the inventive nonwoven laminate has high mechanical stability and advantageous properties. The high bending force, tensile strength and tear strength indicate that the material is stiff, robust and resilient. The stability is much higher than for the comparative single layer product. Further, the performance can be similar or even better than for the comparative laminate with outer spunbond layers. This is advantageous, because staple fiber nonwovens are more homogeneous and can be produced and processed more conveniently.

**Table 2: Mechanical properties of samples (4 mm)**

| **sample** | **A** | **B** | **C** | **D** | **E** |
|---|---|---|---|---|---|
| | comp | comp | comp | | |
| fabric type | SF(single layer) | SB | SB | SF | SF |
| basis weight [g/m²] | 1350 | 1150 | 1450 | 1150 | 1450 |
| bending force [N] for 2 mm deflection | 5.1 | 17 | 27 | 15.1 | 29.5 |
| tensile strength [N] | 990 | 948 | 1230 | 905 | 1088 |
| tear strength [N] | 146 | 124 | 149 | 122 | 152 |
| bending strength [MPa] | 74 | 296 | 343 | 255 | 360 |

**Table 3: Mechanical properties of samples (2 mm)**

| **sample** | **A** | **B** | **C** | **D** | **E** |
|---|---|---|---|---|---|
| | comp | comp | comp | | |
| fabric type | SF (single layer) | SB | SB | SF | SF |
| basis weight [g/m²] | 1350 | 1150 | 1450 | 1150 | 1450 |
| bending force [N] for 2 mm deflection | 3.3 | 7 | 10 | 6.1 | 7.7 |
| tear strength [N] | 124 | 102 | 136 | 102 | 142 |
| bending strength [MPa] | 349 | 546 | 780 | 449 | 574 |

### Example 5: Water absorption rate

The water absorption rate of nonwoven laminates according to example 1 was examined. Samples were immersed in water and dried. The amounts of absorbed water were monitored by weighing. The results are summarized in table 4. The results demonstrate that the water absorption of the inventive nonwoven laminate is much better than for the comparative single layer staple fiber nonwoven. Overall, the water absorption is sufficiently low to meet the requirements of for technical applications, such as underbody shields.

**Table 4: Water absorption of samples (4 mm)**

| **Sample** | **A** | **B** | **C** | **D** | **E** |
|---|---|---|---|---|---|
| | comp | comp | comp | | |
| fabric type | SF (single layer) | SB | SB | SF | SF |
| basis weight [g/m²] | 1350 | 1150 | 1450 | 1150 | 1450 |
| after 24h immersion | 349 | 25.0 | 19.9 | 50.9 | 54.3 |
| after drying 1h | 339 | 20.1 | 15.4 | 43.7 | 47.4 |
| after drying 2h | 334 | 15.2 | 11.0 | 39.1 | 42.9 |
| after drying 4h | 317 | 8.2 | 4.1 | 31.6 | 34.3 |
| after drying 8h | 294 | 0.8 | 0.1 | 18.5 | 19.6 |

## Claims

1. Nonwoven laminate, comprising:
- a nonwoven layer (A) comprising multicomponent staple fibres,
- optionally, a nonwoven layer (B) comprising multicomponent staple fibers or monocomponent staple fibers,
- a needled nonwoven layer (C) comprising monocomponent staple fibres (c1) and multicomponent staple fibers (c2),
- an optional nonwoven layer (D) comprising multicomponent staple fibers or monocomponent staple fibres, and
- optionally, a nonwoven layer (E) comprising multicomponent staple fibres,
wherein the layers are arranged in the order from (A) to (E),
wherein the layers are bonded to each other by melt-bonding, and not by needling,
wherein the multicomponent fibers comprise a polyester component and a copolyester component,
wherein the monocomponent fibers in layer (C) are polyester fibers,
wherein the monocomponent fibers in layer (B) and (D) are copolyester fibers,
wherein the copolyester content in optional nonwoven layers (B) and (D) is higher than in nonwoven layers (A) and optional layer (E),
wherein layer (C) has a basis weight of 500 to 2000 g/m², determined according to DIN EN 29073-1:1992-08,
wherein the nonwoven laminate has a bending force of at least 6 N, determined according to ISO 178:2019 for 2 mm deflection.

2. The nonwoven laminate according to claim 1, wherein the layers (A) and (E) were needled before combining the layers.

3. The nonwoven laminate according to at least one of the preceding claims, wherein at least one nonwoven layer is thermally bonded by calendaring before combining the layers.

4. The nonwoven laminate according to claim 3, wherein layer (C) has been thermally bonded by heat-setting and/or heat-shrinking, and/or wherein the layers (A) and/or layer (E) have been thermally bonded by calendaring.

5. The nonwoven laminate according to at least one of the preceding claims, which does not contain a polyolefin, in particular polypropylene, and/or which does not contain inorganic reinforcements, in particular glass fibres.

6. The nonwoven laminate according to at least one of the preceding claims, which has at least one of the following characteristics:
- a thickness of 1 mm to 10 mm, determined according to DIN EN ISO 9073-2.
- a tensile strength of ≥ 800 N according to ASTM 5034:2009; and/or
- a tear strength of ≥ 100 N according to DIN EN 29073-3:1992-08.

7. The nonwoven laminate according to at least one of the preceding claims, wherein the copolyester in all layers is a copolymer of polyethylene terephthalate, said copolymer having a melting point of ≤ 240°C.

8. The nonwoven laminate according to at least one of the preceding claims, wherein the multicomponent fibers in layers (A), (C) and/or (E) comprise 30% to 95% polyester and 5% to 70% copolyester.

9. The nonwoven laminate according to at least one of the preceding claims, wherein layers (A) and/or (E) have a basis weight of 20 to 200 g/m² according to DIN EN 29073-1:1992-08, respectively.

10. The nonwoven laminate according to at least one of the preceding claims, wherein layer (C) consists of 10 to 90% of monocomponent staple fibres (c1) and 10 to 90% of multicomponent staple fibres (c2).

11. A shaped article comprising a nonwoven laminate according to at least one of claims 1 to 10.

12. A method for producing a shaped article according to claim 11, comprising
- providing a nonwoven laminate of at least one of claims 1 to 10,
- heating the nonwoven laminated to a temperature, at which the copolyester is softened or molten, and
- moulding the nonwoven laminate into the shaped part.

13. Use of a nonwoven laminate or a shaped article according to at least one of claims 1 to 11 as an underbody shield, wheel arch liner, roof pillar, structural part for luggage or luggage compartments, cover or panel materials, or other structural part, especially for automotive application.

14. An underbody shield, a wheel arch liner, roof pillar, structural part for luggage or luggage compartments, cover or panel material, or other structural part, especially for automotive application, which comprises a nonwoven laminate or a shaped article according to at least one of claims 1 to 11.

15. A method for producing the nonwoven laminate according to at least one of claims 1 to 10, comprising:
- preparing layer (C) by needling;
- providing layer (A), and optionally layers (B) and (D) and (E), and
- melt-bonding the layers to each other.
